# EUROPEAN PATENT SPECIFICATION

(11) **EP 2 876 082 B1**
(45) Date of publication and mention of the grant of the patent: **14.08.2024**
(21) Application number: 13823871.2
(22) Date of filing: 31.05.2013
(51) Int. Cl.: C01B 32/184, C01B 32/194, C01B 32/336

(54) **PREPARATION METHOD FOR HIGH-DENSITY HIGH-RIGIDITY GRAPHENE POROUS CARBON MATERIAL**
VERFAHREN ZUr HERSTELLUNG VON PORÖSEM KOHLENSTOFFMATERIAL MIT HOCHDICHTEM UND HOCHFESTEM GRAPHEN
PROCÉDÉ DE PRÉPARATION DE MATÉRIAU CARBONÉ POREUX À BASE DE GRAPHÈNE DE HAUTE DENSITÉ ET DE GRANDE RIGIDITÉ

(30) Priority: 23.07.2012 CN 201210255166
(43) Date of publication of application: 27.05.2015
(73) Proprietor: Zettawatt Energy (Changzhou) Technology Co., Ltd, Changzhou City, Jiangsu Province (CN)
(72) Inventor: YANG, Quanhong, Shenzhen Guangdong 518055 (CN); TAO, Ying, Shenzhen Guangdong 518055 (CN); LV, Wei, Shenzhen Guangdong 518055 (CN); LI, Baohua, Shenzhen Guangdong 518055 (CN); YOU, Conghui, Shenzhen Guangdong 518055 (CN); ZHANG, Chen, Shenzhen Guangdong 518055 (CN); KANG, Feiyu, Shenzhen Guangdong 518055 (CN)
(74) Representative: CMS Cameron McKenna Nabarro Olswang LLP
(86) International application number: PCT/CN2013/076592
(87) International publication number: WO 2014/015709

(56) References cited:
- WO-A1-2012/088683
- CN-A- 102 730 680
- US-A1- 2006 151 382
- US-A1- 2010 144 904
- US-A1- 2011 165 321
- US-A1- 2012 034 442
- US-A1- 2013 230 709
- MARCUS A. WORSLEY ET AL: "Synthesis of Graphene Aerogel with High Electrical Conductivity", JOURNAL OF THE AMERICAN CHEMICAL SOCIETY, vol. 132, no. 40, 13 October 2010 (2010-10-13), pages 14067 - 14069, XP055183592, ISSN: 0002-7863, DOI: 10.1021/ja1072299
- MARCUS A. WORSLEY, ET AL.: "Supporting Information to Synthesis of Graphene Aerogel with High Electrical Conductivity", JACS, 13 October 2010 (2010-10-13), pages S1 - S4, XP002757015
- DATABASE WPI Week 201143, Derwent World Patents Index; AN 2011-E92246, XP002756735
- WORSLEY, M.A. ET AL.: "Synthesis of graphene aerogel with high electrical conductivity", J. AM. CHEM. SOC., vol. 132, 22 September 2010 (2010-09-22), pages 14067 - 14069, XP055183592

## Description

### FIELD

The present disclosure relates to a method for making high density and high hardness porous carbon materials.

### BACKGROUND

Strictly speaking, graphene is a single atomic layer of graphite, namely a crystal of sp²-bonded hybrid atomic layered carbon atoms which are densely packed in a two-dimensional honeycomb crystal lattice. Graphene has surface irregularities and wrinkles, is a real two-dimensional crystal, and is considered as a basic structure unit constituting other sp²-bonded carbon materials. Graphene has excellent electrical, mechanical, thermal, and optical properties. Since its discovery in 2004, widespread attention and research continues.

Graphene, as a leader in advance science, is in fact close to us. Even in pencil scratch on paper, we can find its presence. However, normally prepared graphene is a powdery material with a low packed density and a messy accumulation, which in fact causes difficulties for direct utilization. To satisfy the needs for application, a graphene-based material with a certain structure has to be made. Just like graphite, graphene is difficult to directly form the macroscopic shape, but needs certain methods to indirectly form a graphene assembly. Starting from oxidizing graphene for example, a sol-gel method (Marcus A.Worsley et al. Synthesis of Graphene Aerogel with High Electrical Conductivity, J. Am. Chem. Soc., 2010,132 (40), 14067-14069), hydrothermal method (Yuxi Xu et al., Self-Assembled Graphene Hydrogel via a One-Step Hydrothermal Process, ACS Nano, 2010, 4, 4324-4330), and water-boiling method (Wei Lv et al., One-Pot Self-Assembly of Three-Dimensional Graphene Macroassemblies with Porous Core and Layered Shell, J. Mater. Chem., 2011, 21, 12352-12357) is adopted. Yang et al. prepared a graphene-based porous three-dimensional assembly with high specific surface area by using a hydrothermal method with an introduction of bonding agent (Quanhong Yang et al., Graphene-based porous macroscopic carbon material and preparation method thereof, Chinese patent application number CN 201010568996.8). However, like other aerogel materials, this three-dimensional porous assembly also has disadvantages such as a low density and an absence of hardness. In general, the first thing for these graphene-based materials is forming a special macrostructure through interlinkage of graphene sheets together. The shapability and hardness of the graphene do not draw much attention. The graphene-based material made by a conventional thermal dilation method has a very low density which causes difficulties for direct utilization. Furthermore, forming a graphene assembly by a physical pressing method usually needs extra binder, and the formed graphene assembly has a non-uniform size and poor micro-contact, and easily generates cracks under a high-temperature process. Acticarbon, as a typical carbon-based porous material, has a high specific surface area. However, since defects are introduced into the acticarbon during an activating process and the graphite sheet layer as the basic structure unit of the acticarbon has a small size, the acticarbon has a poor conductivity, which causes difficulties for direct utilization in energy storage field. Furthermore, the acticarbon has difficulties in self-assemble, thus the density and hardness of the acticarbon after self-assembled is low. D1 (US 2012/034442A1) discloses graphene aerogels with high conductivity and surface areas. A method for making a graphene aerogel includes the following steps: (1) preparing a reaction mixture comprising a graphene oxide suspension and at least one catalyst; (2) curing the reaction mixture to produce a wet gel; (3) drying the wet gel to produce a dry gel; and (4) pyrolyzing the dry gel to produce a graphene aerogel. Applications include electrical energy storage including batteries and supercapacitors. D4 (MARCUS A. WORSLEY ET AL: "Synthesis of Graphene Aerogel with High Electrical Conductivity", JOURNAL OF THE AMERICAN CHEMICAL SOCIETY, vol. 132, no. 40, 13 October 2010, pages 14067-14069, XP055183592, ISSN:0002-7863, Dol: 10. 1021/ja 1072299) discloses the synthesis of ultra-low-density three-dimensional macroassemblies of graphene sheets that exhibit high electrical conductivities and large internal surface areas. The materials are prepared as monolithic solids from suspensions of single-layer graphene oxide in which organic sol-gel chemistry is used to cross-link the individuals sheets. The resulting gels are supercritically dried and then thermally reduced to yield graphene aerogels with densities approaching 10 mg/cm³. D5 (DATABASE WEIWeek 201143 Thomson Scientific, London, GB;AN 2011-E92246XP002756735, &CN101993056A (UNIV TIANJIN) 30 March 2011) discloses porous macroscopic carbon material based on graphene, comprising (in wt.%) graphene (60-99) and carbon (40-1) from polyvinyl alcohol. The specific surface area of the material is 500-2600 m²/g, the pore volume is 0.35-2.62 cm³/g, and the apparent density is 12-35 mg/cm³.

### SUMMARY

What is needed, therefore, is graphene-based porous carbon material with a high density and high hardness.

These can be achieved by the following ways.

A method for making graphene-based porous carbon material according to claim 1 is provided, which comprises following steps of:
Step 1, forming an original sol by adding a graphene-based component or a mixture of a graphene-based component and an auxiliary component into a solvent and dispersing the graphene-based component, the graphene-based component being selected from a group consisting of graphite, graphite oxide, graphene oxide, graphene, or any combination thereof; the auxiliary component being selected from a group consisting of carbon nanotube, carbon black, graphite, polyvinyl alcohol, sucrose, glucose, or any combination thereof.
Step 2, preparing a graphene-based gel by placing the original sol prepared in step 1 in a reacting container and heating the original sol to a temperature of 20°C to 500°C for 0.1 hours to 100 hours to obtain the graphene-based gel.
Step 3, drying process: drying the graphene-based gel at a temperature of 0°C to 200°C to obtain the graphene-based porous carbon material with high density and high hardnesss.

Optionally,
the method further comprises:
Step 4, heating the material prepared in step 3 in an oxygen-deficient atmosphere and a temperature of 100°C to 3600°C for 0.1 hours to 100 hours, or/and activating the material at a temperature of 200°C to 2000°C for 0.1 hours to 50 hours.

In step 1, the weight percentage of the auxiliary component in the total weight of the mixture is greater than or equal to 0 and less than 98%, and optionally less than 30%. The using of at least one of carbon nanotube, carbon black, and graphite as the auxiliary component renders the achieved graphene-based porous carbon material a better conductive network and with superior electrical and thermal conductivities. The using of at least one of polyvinyl alcohol (PVA), sucrose, and glucose as the auxiliary component can enhance a bridging effect between the graphene-based components and greatly increase the density and hardness of the achieved graphene-based porous carbon material. Depending on the individual carbon sources, the prepared graphene-based porous carbon material can have characteristics of both soft carbon and hard carbon, which facilitates the applications in the field of energy storage. Because of the great differences in the densities and volumes of the auxiliary component and the graphene-based component, and also because of the different forms and different weight losses between the auxiliary component and the graphene-based component during the hydrothermal (solvothermal) reaction, the high-density and high-hardness porous carbon material with the basic structure unit of graphene can be formed in one step even when the weight percentage of the auxiliary component is 98%. Considering the dispersibility of the auxiliary component, the weight percentage of the auxiliary component is optionally less than 30%.

In step 1, the solvent is selected from a group consisting of water, ethanol, methanol, dimethyl formamide, ethylene glycol, methyl pyrrolidone, or any combination thereof.

In step 1, a dispersing method is selected from at least one method of mechanical stirring, magnetic stirring, ultrasonic dispersing, milled dispersing, and high energy treatment.

In step 1, a pH value of the original sol is adjusted to 8 or less, to optimize the preparation conditions for reducing the critical reaction temperature and reaction time for preparing the graphene-based gel. The graphene-based porous materials with high density and high specific surface area can be made when the energy consumption of the preparation process greatly decreases and the safety hazards in mass production are reduced.

In step 2, a heating method is at least one method of electric heating, microwave heating, infrared heating, and induction heating.

In step 2, a temperature is in a range from 100 °C to 200°C, and a time period is in a range from 1 hour to 20 hours.

In step 4, the oxygen deficient atmosphere is created by vacuum pumping the reacting container and/or introducing at least one of inert gas and reductive gas to the reacting container; the inert gas is selected from a group consisting of nitrogen gas, argon gas, helium gas, or any combination thereof; the reductive gas is selected from a group consisting of ammonia gas, hydrogen gas, carbon monoxide, or any combination thereof.

In step 4, a temperature for the heating is in a range from 300°C to 2400°C, and a time period for the heating is in a range from 2 hours to 10 hours.

In step 4, the activating is at least one of chemical activating and physical activating.

The chemical activating comprises at least one of liquid phase activating and solid phase activating.

In step 4, a temperature for the activating is in a range from 600 °C to 900 °C, and the time period for the activating is in a range from 0.5 hours to 8 hours.

Compared with the conventional graphene-based material, the graphene-based porous carbon material made by the above method has the physical property of high density and high hardness. The graphene-based porous carbon material made by the above method is example not encompassed by the wording of the claims. The base unit of the graphene-based porous carbon material is graphene. Wherein the graphene-based porous carbon material comprises a plurality of graphene sheets joined and bonded with each other to form a network structure, the graphene-based porous carbon material has a density of 0.3 g/cm³ to 4.0 g/cm³, a hardness of 0.01 GPa to 6.0 GPa, a specific surface area of 5 m²/g to 3000 m²/g, and a pore volume of 0.1 cm³/g to 2.0 cm³/g. The more acidic the pH value of the original sol is, the more compact the graphene-based gel is, and the greater the density of the product is after being dried. Also, the higher the drying temperature is, the greater the density and hardness of the porous carbon material will be. As the heating temperature and the time period change, the hardness of the graphene-based porous carbon material reduces first and then increases. The reason is that, at a lower temperature, the material experiences a functional group loss, during which the porous structure develops and the specific surface area increases, accompanying a certain degree of harness loss. And at a higher temperature stage, the material shrinks to increase the hardness, and forms a certain amount of closed pores, which cannot be included in the calculation of the effective specific surface area, to decrease the specific surface area. The closed pores can be further opened by the activating reaction, which can also make additional pores. The achieved graphene-based porous carbon material can have abundant pores, higher specific surface area and be free of binder.

Compared with the prior art, the present disclosure makes certain advances. The present method makes the graphene sheets bonded with each other and self assembled without adding any binder. The macroscopic shape of the graphene-based gel is solidified during the water removing and drying step, to form the high-density, high-hardness, uniform, thermally conductive, high-specific-surface-area, pore-rich graphene-based porous carbon material.

The present method includes the preparing step of the graphene-based gel, and the presence of this step makes it possible to use an impregnation method, to simply and efficiently load a catalyst, to increase the doping range and uniformity of the catalyst.

The graphene-based porous carbon material formed by the present method not only has a macroscopic shape without adding any binder but also has the considerable hardness when the specific surface area is in a range from 800 m²/g to 3000 m²/g. The material does not tend to be powdery, which provides better convenience for the applications in adsorption, catalysis, and energy storage fields.

The present method not only makes the assembled graphene-based porous carbon material with the specific surface area of 3000 m²/g, but also makes the super hard material with certain specific surface area.

The graphene-based porous carbon material is hard and wear-resistant; conductive in itself and requiring no additional conductive agent; high-shapability by using molds or cutting steps to prepare a variety of desired shapes; pore-rich so that is an ideal acceptor for various fillers such as metal oxide nanoparticles, metal nanoparticles (e.g., Co, Au, Ag, Pt, Ru et al., and alloys thereof), polymers, proteins, amino acids, and enzyme biomolecules. The graphene-based porous carbon material has a high porosity, and not only has a significant number of micropores, but also has a suitable amount of pores with a larger size, preferable for ion transportation.

Optionally,
Adding the step of heating and/or activating of the material during the present method, in particular heating at the temperature of 300°C to 2400°C and activating at the temperature of 600 °C to 900 °C, and more specifically, heating and activating below 850°C, can further adjust the porosity and hardness to obtain the aimed material. Specifically, the heating or activating below 850°C can further increase the porosity and the specific surface area of the material with a slightly reduction of hardness, which can satisfy the need for using the assembled graphene-based carbon material. The conventional graphene-based porous carbon materials having the same porosity always have a low density and insignificant hardness, and need an additional binder to form a desired macroscopic shape. Above 850°C, the graphene sheets further curves and shrinks to increase the hardness, however, due to the forming of closed pores, the specific surface area decreases. In short, by adjusting the drying condition, the heating condition and adding the auxiliary component, the present method can make the porous material with the hardness larger than 0.01 GPa and can reach 6.0 GPa, and the specific surface area larger than 5 m²/g and can reach 3000 m²/g.

In the original sol with an acidic pH value, forces exist between the graphene layers/sheets becomes stronger, thus a more compact graphene-based gel is assembled. Also because of the stronger forces between graphene layers/sheets, the pressure requirement of the reacting container for preparing the graphene-based gel decreases, thereby widening the material selection scope of the reacting container, and also reducing the critical reacting time in the reacting container. Thus, the energy consumption and safety risks during industrial production are significantly reduced.

Because of its extensive porosity and good mechanical strength, the graphene-based porous carbon material can be used as a porous container, filled with various fillers such as metal oxide nanoparticles, metal nanoparticles (e.g., Co, Au, Ag, Pt, Ru et al., and alloys thereof), polymers, proteins, amino acids, and enzyme biomolecules. The graphene-based porous carbon material can also play a role in the adsorption of heavy metal ions, dyes, toxic chemicals, oil, etc., meanwhile it is a good choice for the filler of the chromatographic column. The graphene-based porous carbon material can have a good performance in heavy metal ion detection, and can be used as a thermal conductivity material due to the excellent thermal conductivity thereof. As an electrode material for lithium ion batteries and super capacitors, the graphene-based porous carbon material has an outstanding specific volume capacity. During the preparation of the graphene-based porous carbon material, a catalyst precursor can be additionally added to the sol, which easily achieves uniform catalyst loading, and effectively improves the uniformity and the doping range. As a catalyst carrier, the graphene-based porous carbon material may be used in fixed bed reactors, fluidized bed reactors, fuel cells, and so on.

### BRIEF DESCRIPTION OF THE DRAWINGS

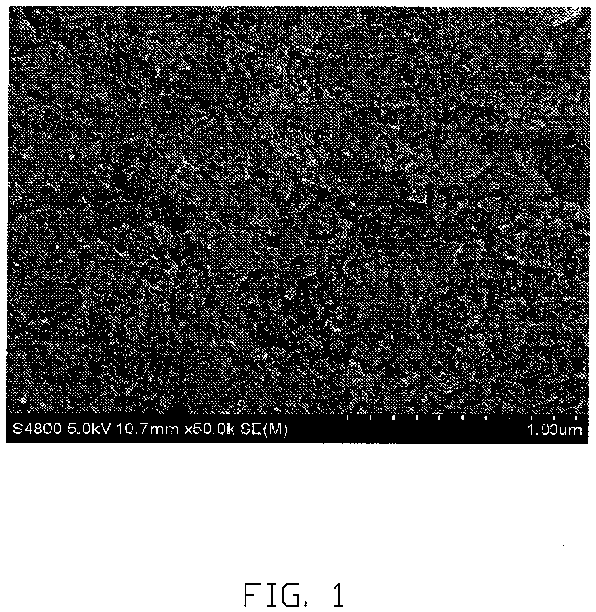

FIG. 1 shows a scanning electron microscope (SEM) image of a high-density and high-hardness graphene-based porous carbon material made by a first embodiment of the present disclosure.
FIG. 2 shows a SEM image of the high-density and high-hardness graphene-based porous carbon material made by a fourth embodiment of the present disclosure.

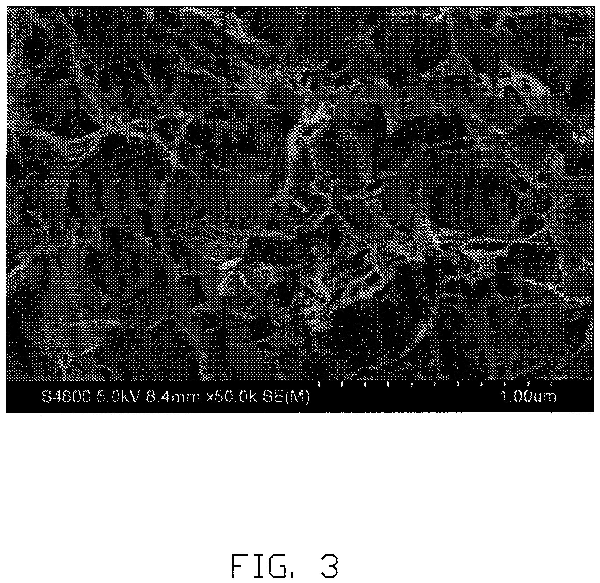

FIG. 3 shows a nitrogen gas adsorption-desorption curve of the high-density and high-hardness graphene-based porous carbon material made by a first embodiment of the present disclosure.

### DETAILED DESCRIPTION

Implementations of the present disclosure will now be described, by way of example only, with reference to the attached figures.

The present disclosure provides a method for making graphene-based porous carbon material, to obtain the graphene-based porous carbon material with a stable macroscopic shape, high-density and high-hardness. The method includes three steps of:

Step 1, forming an original sol by adding a graphene-based component or a mixture of a graphene-based component and an auxiliary component in a solvent, and dispersing the graphene-based component by mechanical stirring, magnetic stirring, ultrasonic dispersing, milled dispersing, and high energy treatment, to obtain the original sol for preparing the graphene-based porous carbon material. The solvent can be selected from a group consisting of water, ethanol, methanol, dimethyl formamide, ethylene glycol, methyl pyrrolidone, or any combination thereof. The graphene-based component can be selected from a group consisting of graphite, graphite oxide, graphene oxide, graphene, or any combination thereof. The auxiliary component can be selected from a group consisting of carbon nanotube, carbon black, graphite, polyvinyl alcohol (PVA), sucrose, glucose, or any combination thereof. A weight percentage of the auxiliary component in the total weight of the auxiliary component and the graphene-based component can be less than 98%, and in one embodiment is less than 30%.

Step 2, preparing a graphene-based gel: placing the original sol prepared in step 1 in a reacting container, optionally a pH value of the original sol is 8 or less, and heating the original sol to a temperature of about 20°C to about 500°C for about 0.1 hours to about 100 hours, to obtain the graphene-based gel. In one embodiment, the original sol is heated to a temperature of about 100 °C to about 200°C for about 1 hour to about 20 hours. According to a selection of the reacting condition, the reacting container can be a hydrothermal reacting container or a regular normal pressure container. According to a selection of the reacting material, the heating method is selected from electric heating, microwave heating, infrared heating, or induction heating.

Step 3, drying process: drying the graphene-based gel at a temperature of about 0°C to about 200°C to obtain the graphene-based porous carbon material. The hardness and porosity of the graphene-based porous carbon material are further adjusted by the following step.

Step 4, heating the graphene-based porous carbon material obtained in the step 3 in an oxygen-deficient atmosphere and a temperature of about 100°C to about 3600°C for about 0.1 hours to about 100 hours. In one embodiment, the graphene-based porous carbon material is heated at the temperature of about 300°C to about 2400°C for about 2 hours to about 10 hours. The oxygen deficient atmosphere can be achieved by vacuum pumping the reacting container and/or introducing at least one of an inert gas and a reductive gas to the reacting container. The inert gas can be at least one of nitrogen gas, argon gas, and helium gas. The reductive gas can be selected from a group consisting of ammonia gas, hydrogen gas, carbon monoxide (CO) gas, or any combination thereof. The step 4 can further include or be replaced by activating the graphene-based porous carbon material at a temperature of about 200°C to about 2000°C for about 0.1 hours to about 50 hours. In one embodiment, the graphene-based porous carbon material is activated at the temperature of about 600 °C to about 900 °C for about 0.5 hours to about 8 hours. The activating can be at least one of chemical activation and physical activation. The chemical activating can be at least one of liquid phase activation and solid phase activation. After being cooled, the high-density and high-hardness graphene-based porous carbon material is obtained. The examples not encompassed by the wording of the claims further provides a graphene-based porous carbon material made by the above method. From SEM, the graphene-based porous carbon material includes a number of graphene sheets joined and bonded with each other to form a network structure, with a density of about 0.3 g/cm³ to about 4.0 g/cm³, a hardness (H) of about 0.01 GPa to about 6.0 GPa, a specific surface area of about 5 m²/g to about 3000 m²/g, and a pore volume of about 0.1 cm³/g to about 2.0 cm³/g. In one embodiment, the hardness is in a range from about 0.05 GPa to about 3.0 GPa, an elastic module (E) is in a range from about 0.5 GPa to about 40 GPa, the density is in a range from about 0.8 g/cm³ to about 2.2 g/cm³, an average size of the pore is in a range from about 0.5 nm to about 600 nm, and a thickness of the pore wall is in a range from about 0.335 nm to about 3,350 nm. The graphene-based porous carbon material can be applied to an adsorption material, a filler of a chromatographic column, a porous container, a catalyst carrier, an electrode material, and a thermal conducting material, which are examples not encompassed by the wording of the claims.

Several examples are provided to further describing the method of the present disclosure.

### Example 1

85 mL of deionized water is added to 170 mg of graphite oxide powder made by Hummer method and ultrasonically dispersed at a power of about 200W for about 2 hours to achieve a graphene oxide sol. A pH value of the graphene oxide sol is adjusted to about 3. Then the graphene oxide sol is sealed in a hydrothermal reacting container. A volume of the container is 100 mL. The hydrothermal reacting container is heated in a muffle furnace at about 150°C for about 6 hours. After the hydrothermal reacting container is cooled, the formed graphene-based gel, which is a smooth cylindrical shaped material having the same shape with the inner space of the container, is taken out from the container and dried at about 1°C. After that, the cylindrical shaped graphene-based gel is heated to about 700°C with a temperature increasing at a rate of about 5°C/min in argon atmosphere and kept at that temperature for about 5 hours, to achieve the high density and high hardness graphene-based porous carbon material. The graphene-based porous carbon material has a specific surface area per unit gram of about 750 m²/g, a specific surface area per unit volume of about 960 m²/cm³, a hardness of about 0.78 GPa, and an elastic modulus of about 4.36 GPa.

### Example 2

85 mL of deionized water is added to 510 mg of graphite oxide powder made by Hummer method and ultrasonically dispersed at a power of about 200W for about 2 hours to achieve a graphene oxide sol. A pH value of the graphene oxide sol is adjusted to about 8. Then the graphene oxide sol is sealed in a reacting container. A volume of the container is 100 mL. The reacting container is heated at about 500°C for about 3 hours. After the reacting container is cooled, the formed graphene-based gel, which is a smooth cylindrical shaped material, is taken out from the container. The cylindrical shaped graphene-based gel is cut into thin pieces with a thickness of about 1 millimeter to about 5 millimeters and dried at room temperature. After that, the pieces of graphene-based gel are heated to 3600°C with a temperature increasing at a rate of about 5°C/min in argon atmosphere and kept at that temperature for about 2 hours, to achieve the high density and high hardness graphene-based porous carbon material. The graphene-based porous carbon material has a density of about 0.34 g/cm³, a hardness of about 1.68 GPa, and a specific surface area per unit gram of about 750 m²/g.

### Example 3

85 mL of dimethyl formamide is added to a mixture of 170 mg of graphite oxide powder made by Hummer method and 17 mg of carbon nanotubes, and ultrasonically dispersed at a power of about 200W for about 3 hours to achieve a sol. A pH value of the graphene oxide sol is adjusted to about 3. Then the graphene oxide sol is sealed in a hydrothermal reacting container. A volume of the container is 100 mL. The hydrothermal reacting container is heated in a muffle furnace at about 150°C for about 10 hours. After the hydrothermal reacting container is cooled, the formed graphene-based gel is taken out from the container and dried at room temperature to form the graphene-based porous carbon material. After that, the graphene-based gel is placed in 3 mol/L of KOH solution for about 24 hours to chemically activate the graphene-based gel and dried for about 24 hours. Then, the activated graphene-based porous carbon material is heated to about 900°C with a temperature increasing at a rate of about 10°C/min in argon atmosphere and kept at that temperature for about 0.1 hours, to achieve the high density and high hardness graphene-based porous carbon material with a specific surface area per unit gram of about 2980 m²/g.

### Example 4

85 mL of deionized water is added to a mixture of 170 mg of graphite oxide powder made by Hummer method and 8.729 g of sucrose, and ultrasonically dispersed at a power of 200W for 2 hours to achieve a graphene oxide sol. A pH value of the graphene oxide sol is adjusted to about 3. Then the graphene oxide sol is sealed in a high pressure reacting container. The high pressure reacting container is heated in a muffle furnace at about 180°C for about 3 hours. After the high pressure reacting container is cooled, the formed smooth graphene-based gel is taken out from the container and dried at 200°C to form the graphene-based porous carbon material. The graphene-based porous carbon material has a plurality of graphene sheets joined with each other and a plurality of carbon spheres decorated therebetween, the carbon spheres are formed from sucrose. A percentage of the graphene in the graphene-based porous carbon mateiral is about 10%. The graphene-based porous carbon material has a hardness of about 5.93 GPa and a density of about 2.76 g/cm³.

### Example 5

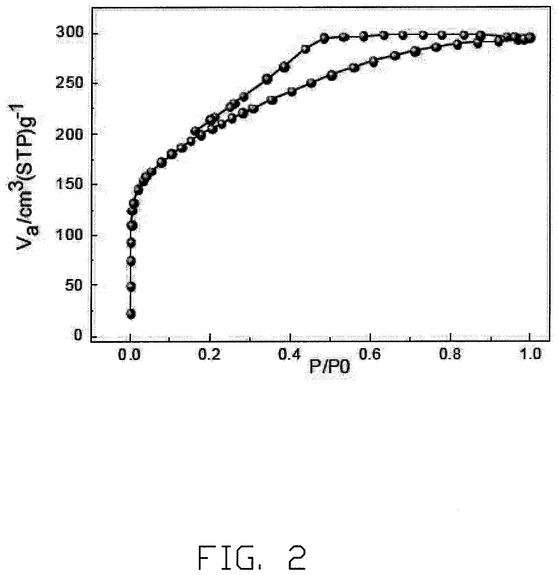

6 mL of polyvinyl alcohol with a concentration of about 20 mg/mL is added to 1800 mL of liquid filtrate obtained during the forming of graphene oxide by using the Hummer method to form a liquid mixture. The liquid mixture is centrifuged at 3800 rpm for about 20 minutes. 85 g of the bottom material after the centrifuge is collected and sealed in a hydrothermal reacting container. A volume of the container is 100 mL. The hydrothermal reacting container is heated in a muffle furnace at about 150°C for about 6 hours. After the hydrothermal reacting container is cooled, the formed graphene-based gel is taken out from the container and dried at about 110°C for about 20 hours to achieve the graphene-based porous carbon material. Then the graphene-based gel is heated to 800°C with a temperature increasing at a rate of about 5°C/min in argon atmosphere and kept at that temperature for about 6 hours, to achieve the high-density and high-hardness graphene-based porous carbon material. Referring to FIG. 2, the graphene-based porous carbon material has a network structure formed by overlapped and joined graphene sheets.

### Example 6

6 mg/mL of uniform graphene oxide sol formed by ultrasonic dispersing is obtained. A pH value of the graphene oxide sol is adjusted to about 3. 80 mL of the pH value adjusted graphene oxide sol is put into a screw shaped glass cuvette and sealed in a hydrothermal reacting container. A volume of the container is 100 mL. The hydrothermal reacting container is heated in a muffle furnace at about 120°C for about 20 hours. After the hydrothermal reacting container is cooled, the formed screw shaped graphene-based gel is taken out from the container and dried at 110°C for about 10 hours. Then the graphene-based porous carbon material is heated to 800°C with a temperature increasing at a rate of about 5°C/min in argon atmosphere and kept at that temperature for about 6 hours, to achieve the high-density and high-hardness screw shaped graphene-based porous carbon material.

### Example 7

85 mL of deionized water is added to 170 mg of graphite oxide powder made by Hummer method and ultrasonically dispersed at a power of about 200 W for about 2 hours to achieve a graphene oxide sol. A pH value of the graphene oxide sol is adjusted to about 3. Then the graphene oxide sol is sealed in a 100 mL hydrothermal reacting container. The hydrothermal reacting container is heated in a muffle furnace at about 150°C for about 6 hours. After the hydrothermal reacting container is cooled, the formed graphene-based gel, which is a smooth cylindrical shaped material, is taken out from the container. The cylindrical shaped graphene-based gel is dried at room temperature, and then heated to 850°C with a temperature increasing at a rate of about 5°C/min in argon atmosphere and kept at that temperature for about 10 minutes. Then, an activating step is applied by introducing a mixture of water vapor and nitrogen gas (a percentage of the water vapor in the mixture is about 20%) for about 40 minutes, to achieve the high density and high hardness graphene-based porous carbon material. The graphene-based porous carbon material has a specific surface area per unit gram of about 1600 m²/g, and a hardness of about 0.03 GPa, and a density of about 0.83 g/cm³.

### Example 8

85 mL of deionized water is added to 170 mg of graphite oxide powder made by Hummer method and ultrasonically dispersed at a power of about 200W for about 2 hours to achieve a graphene oxide sol. A pH value of the graphene oxide sol is adjusted to about 1. Then the graphene oxide sol is sealed in a hydrothermal reacting container. A volume of the container is 100 mL. The reacting container is heated in a muffle furnace at about 50°C for about 3 hours. After the hydrothermal reacting container is cooled, the formed graphene-based gel, which is a smooth cylindrical shaped material, is taken out from the container. The cylindrical shaped graphene-based gel is dried at room temperature to form the graphene-based porous carbon material. As a result of the pH value of the graphene oxide sol being adjusted to about 1, the temperature and time for the hydrothermal reaction are both greatly reduced.

### Example 9

88 mL of deionized water is added to 176 mg of graphite oxide powder made by Hummer method and ultrasonically dispersed at a power of about 200W for about 2 hours to achieve a graphene oxide sol. A pH value of the graphene oxide sol is adjusted to about 11. Then the graphene oxide sol is sealed in a hydrothermal reacting container. A volume of the container is 100 mL. The reacting container is heated in a muffle furnace at about 200°C for about 100 hours. After the hydrothermal reacting container is cooled, the formed graphene-based gel, which is a smooth cylindrical shaped material, is taken out from the container. The cylindrical shaped graphene-based gel is dried at room temperature.

### Example 11

The steps and conditions in this example are the same as those of Example 7, except that the mixture of water vapor and nitrogen gas is introduced at a temperature of about 2000 °C. The high density and high hardness graphene-based porous carbon material is achieved.

### Example 12

The steps and conditions in this example are the same as those of Example 2, except that the graphene-based gel is cut into tetrahedrons and dried at room temperature. The high-density and high-hardness graphene-based porous carbon tetrahedrons are achieved. By using the same method, square and cuboid shaped high density and high hardness graphene-based porous carbon material can also formed.

### Example 13

The steps and conditions in this example are the same as those of Example 7, except that the mixture of water vapor and nitrogen gas is introduced at a temperature of about 200 °C. The high density and high hardness graphene-based porous carbon material is achieved.

### Example 14

The steps and conditions in this example are the same as those of Example 8, except that the graphene-based gel is placed in a 5 wt% of amino acid solution for about 10 hours before the drying step to allow the amino acid to infill. The amino acid filled high-density and high-hardness graphene-based porous carbon material with a filling percentage of about 37% is achieved.

### Example 15

The high density and high hardness graphene-based porous carbon material obtained in Example 2 is used as an anode active material of a lithium ion battery. The graphene-based porous carbon material is milled into powder and mixed with PTFE (60wt%) in a ratio of 90: 10 in N-Methylpyrrolidone (NMP) and ultrasonically dispersed for 30 minutes to form a slurry. The slurry is coated on copper foil, heated for about 12 hours at about 120 °C, and cut into 1 cm² pieces. The lithium ion battery is assembled in an Argon atmosphere glove box using the formed piece as a cathode electrode and a lithium metal foil as an anode electrode. The electrolyte solution is 1 mol/L LiPF₆ in a mixture of EC, DC, and EMC in 1:1:1 of volume ratio. The separator is made of polyethylene. A CR2032-type coin cell is assembled. A volume specific capacity of the lithium ion battery is about 910 mAh/cm³.

### Example 16

A catalyst carrier using the graphene-based porous carbon material is provided. The steps and conditions in this example are the same as those of Example 1, except that the graphene-based gel is placed in a 28wt% of PdCl₂ solution for about 24 hours before the drying step. The high-hardness, shaped as required, and uniformly-loaded Pd catalyst is formed. Using the Pd catalyst in a heck reaction, a selectivity is about 96% and a yielding is near to 100%.

### Example 17

The high-density and high-hardness graphene-based porous carbon material obtained in Example 8 is used as a thermally-conductive material. The thin pieces are mounted below a heat generating device as heat dissipation fins. A thermal conductivity of the heat dissipation fins is about 800 W/(m · K).

### Example 18

The high-density and high-hardness graphene-based porous carbon material obtained in Example 8 is used as an electrode material of a supercapacitor. The graphene-based porous carbon material is milled into powder and mixed with PTFE (60wt%) in a weight ratio of 90: 10 in ethanol and ultrasonically dispersed for 30 minutes to form a slurry. The slurry is coated on nickel foam foils, heated overnight at about 70 °C, and placed into alkaline electrolyte for about 12 hours to form the electrodes. The volume specific capacity of the supercapacitor using the electrodes is about 368 F/cm³.

The embodiments shown and described above are only examples. Even though numerous characteristics and advantages of the present technology have been set forth in the foregoing description, together with details of the structure and function of the present disclosure, the disclosure is illustrative only, and changes may be made in the detail, including in particular the matters of shape, size, and arrangement of parts within the principles of the present disclosure, up to and including the full extent established by the broad general meaning of the terms used in the claims.

## Claims

1. A method for making graphene-based porous carbon material comprising steps of:
Step 1, forming an original sol by adding a graphene-based component or a mixture of a graphene-based component and an auxiliary component into a solvent and dispersing the graphene-based component, the graphene-based component being selected from a group consisting of graphite, graphite oxide, graphene oxide, graphene, or any combination thereof; the auxiliary component being selected from a group consisting of carbon nanotube, carbon black, graphite, polyvinyl alcohol, sucrose, glucose, or any combination thereof;
Step 2, preparing a graphene-based gel by placing the original sol prepared in step 1 in a reacting container and heating the original sol to a temperature of 20°C to 500°C for 0.1 hours to 100 hours; and
Step 3, drying the graphene-based gel at a temperature of 0°C to 200°C to obtain the graphene-based porous carbon material.

2. The method of claim 1, further comprising:
Step 4, heating the graphene-based porous carbon material prepared in step 3 in an oxygen-deficient atmosphere at a temperature of 100°C to 3600°C for 0.1 hours to 100 hours, or/and activating the graphene-based porous carbon material at a temperature of 200°C to 2000°C for 0.1 hours to 50 hours.

3. The method of claim 1, wherein in step 1, the weight percentage of the auxiliary component in the total weight of the auxiliary component and the graphene-based component is greater than or equal to 0 and less than 98%.

4. The method of claim 1, wherein in step 2, a pH value of the original sol is adjusted to 8 or less, the temperature is in a range from 100 °C to 200°C, and a time period is in a range from 1 hour to 20 hours.

5. The method of claim 2, wherein in step 4, a temperature for the activating is in a range from 600 °C to 900 °C, and the time period for the activating is in a range from 0.5 hours to 8 hours.

## Patentansprüche

1. Verfahren zum Fertigen von graphenbasiertem porösem Kohlenstoffmaterial, umfassend die Schritte:
Schritt 1, Ausbilden eines Anfangssols durch Hinzufügen einer graphenbasierten Komponente oder einer Mischung aus einer graphenbasierten Komponente und einer Hilfskomponente zu einem Lösungsmittel und Dispergieren der graphenbasierten Komponente, wobei die graphenbasierte Komponente aus einer Gruppe ausgewählt ist, bestehend aus Graphit, Graphitoxid, Graphenoxid, Graphen oder einer beliebigen Kombination davon; wobei die Hilfskomponente aus einer Gruppe ausgewählt ist, bestehend aus Kohlenstoffnanoröhren, Ruß, Graphit, Polyvinylalkohol, Saccharose, Glucose oder einer beliebigen Kombination davon;
Schritt 2, Herstellen eines graphenbasierten Gels durch Platzieren des Anfangssols, das in Schritt 1 hergestellt wird, in einen Reaktionsbehälter und Erhitzen des Anfangssols 0,1 Stunden bis 100 Stunden lang auf eine Temperatur von 20 °C bis 500 °C; und
Schritt 3, Trocknen des graphenbasierten Gels bei einer Temperatur von 0 °C bis 200 °C, um das graphenbasierte poröse Kohlenstoffmaterial zu erhalten.

2. Verfahren nach Anspruch 1, ferner umfassend:
Schritt 4, Erhitzen des graphenbasierten porösen Kohlenstoffmaterials, das in Schritt 3 hergestellt wird, in einer sauerstoffarmen Atmosphäre 0,1 Stunden bis 100 Stunden lang bei einer Temperatur von 100 °C bis 3600 °C oder/und Aktivieren des graphenbasierten porösen Kohlenstoffmaterials 0,1 Stunden bis 50 Stunden lang bei einer Temperatur von 200 °C bis 2000 °C.

3. Verfahren nach Anspruch 1, wobei in Schritt 1 der Gewichtsprozentsatz der Hilfskomponente bezogen auf das Gesamtgewicht der Hilfskomponente und der graphenbasierten Komponente größer als oder gleich 0 und kleiner als 98 % ist.

4. Verfahren nach Anspruch 1, wobei in Schritt 2 ein pH-Wert des Anfangssols auf 8 oder weniger eingestellt wird, die Temperatur in einem Bereich von 100 °C bis 200 °C liegt und eine Zeitdauer in einem Bereich von 1 Stunde bis 20 Stunden liegt.

5. Verfahren nach Anspruch 2, wobei in Schritt 4 eine Temperatur für das Aktivieren in einem Bereich von 600 °C bis 900 °C liegt und die Zeitdauer für das Aktivieren in einem Bereich von 0,5 Stunden bis 8 Stunden liegt.

## Revendications

1. Procédé permettant de fabriquer un matériau carboné poreux à base de graphène comprenant les étapes consistant à :
Étape 1, former un sol original en ajoutant un composant à base de graphène ou un mélange d'un composant à base de graphène et d'un composant auxiliaire dans un solvant et en dispersant le composant à base de graphène, le composant à base de graphène étant choisi dans un groupe constitué de graphite, oxyde de graphite, oxyde de graphène, graphène, ou n'importe quelle combinaison de ceux-ci ; le composant auxiliaire étant choisi dans un groupe constitué de nanotube de carbone, noir de carbone, graphite, alcool polyvinylique, saccharose, glucose, ou n'importe quelle combinaison de ceux-ci ;
Étape 2, préparer un gel à base de graphène en plaçant le sol original préparé à l'étape 1 dans un récipient de réaction et en chauffant le sol original à une température de 20 °C à 500 °C pendant 0,1 heure à 100 heures ; et
Étape 3, sécher le gel à base de graphène à une température de 0 °C à 200 °C pour obtenir le matériau carboné poreux à base de graphène.

2. Procédé selon la revendication 1, comprenant en outre :
Étape 4, chauffage du matériau carboné poreux à base de graphène préparé à l'étape 3 dans une atmosphère pauvre en oxygène à une température de 100 °C à 3600 °C pendant 0,1 heure à 100 heures, ou/et activation du matériau carboné poreux à base de graphène à une température de 200 °C à 2000 °C pendant 0,1 heure à 50 heures.

3. Procédé selon la revendication 1, dans lequel à l'étape 1, le pourcentage en poids du composant auxiliaire dans le poids total du composant auxiliaire et du composant à base de graphène est supérieur ou égal à 0 et inférieur à 98 %.

4. Procédé selon la revendication 1, dans lequel à l'étape 2, une valeur de pH du sol original est ajustée à 8 ou moins, la température est dans une plage de 100 °C à 200 °C, et un laps de temps est dans une plage de 1 heure à 20 heures.

5. Procédé selon la revendication 2, dans lequel à l'étape 4, une température pour l'activation est dans une plage de 600 °C à 900 °C, et le laps de temps pour l'activation est dans une plage de 0,5 heure à 8 heures.
